# EUROPEAN PATENT APPLICATION

(11) **EP 4 810 218 A1**
(43) Date of publication of application: **23.09.2026**
(21) Application number: 25220813.7
(22) Date of filing: 04.12.2025
(51) Int. Cl.: B29B 17/00, B29B 17/04, B29K 75/00, B29L 31/48

(54) **METHOD FOR THE USEFUL REUSE OF ONE OR MORE RAW MATERIALS OF DISPOSABLE GLOVES COMPOSED OF THERMOPLASTIC POLYURETHANE (TPU)**

(30) Priority: 18.03.2025 NL 4000026
(71) Applicant: Gloovy B.V., 5061 EH Oisterwijk (NL)
(72) Inventor: VAN NOESEL, Matz Gerardus Robert, 5061EH OISTERWIJK (NL)
(74) Representative: Algemeen Octrooi- en Merkenbureau B.V.

(57) **Abstract**

The present disclosure concerns a method for the useful reuse of one or more raw materials of disposable gloves composed of thermoplastic polyurethane (TPU). In addition, the present disclosure relates to a granulate obtained with such a method and a disposable glove manufactured using such granulate.

## Description

The present invention relates to a method for the useful reuse of one or more raw materials of disposable gloves composed of thermoplastic polyurethane (TPU). In addition, the present invention relates to a granulate obtained with such a method and to a disposable glove comprising such granulate.

Disposable gloves composed of thermoplastic polyurethane (TPU) are known in the art.

German Gebrauchsmusterschrift DE 20 2021 102 345 U1 relates to a disposable protective glove, wherein the protective glove is formed with two layers of a single-layer breathable fabric material, wherein the fabric material has as its main component a thermoplastic polymer and a thickness in the range of 20 µm to 60 µm, and wherein the two layers of the single-layer fabric material have the same thickness, wherein the surface material has a thickness in the range of 25 µm to 60 µm, 30 µm to 60 µm, or 30 µm to 50 µm. The thermoplastic elastomer is an ethylene-vinyl acetate copolymer or a thermoplastic, in particular polyester-based or polyether-based polyurethane.

CN218044667U relates to a so-called disposable plastic glove picking and placing device for taking off and placing disposable plastic gloves, wherein use is made of the principle of insulation by inflation to take off the disposable plastic gloves easily and quickly. The apparatus may recycle the disposable gloves after they have been emptied, the further details of which are not explained.

Japanese Publication JP2024114462A relates to a recycling system for gloves including a glove recovery step in which a glove collector collects unnecessary gloves from a glove user, and a recycled oil production step in which recycled oil is produced from the glove.

Chinese Publication CN 208 812 333 relates to a wear-resistant powderless PVC polyurethane glove coating recycling device including a heating tank, a collection box, and a cooling pipe, wherein a rotary motor is installed on the upper surface of the heating tank and a rotating roller is connected to the bottom of the rotary motor.

CN 217 777 469 refers to a disposable PE glove recycling device including a cleaning box provided with a sealing plate is welded to the inner wall, a cleaning mechanism (3) being used to clean disposable PE glove fragments, a recycling box and a conveying mechanism provided inside the recycling box, wherein the conveying mechanism is used to convey disposable PE gloves.

CN 214 820 013 refers to a disposable PVC glove recycling and crushing device including a guide wheel, a support plate, a spring, and a storage box, wherein a housing is provided above the guide wheel, and a motor is installed inside the housing.

US Publication US 2021/017326 relates to a method of producing a thermoplastic polyurethane wherein a thermoplastic polyurethane (TPU-1) or a polyurethane mixture comprising TPU-1 is brought into an extruder in reaction, wherein TPU-1 or the polyurethane mixture containing TPU-1 comes from a recycling process, wherein the method comprises providing an article consisting essentially of a thermoplastic polyurethane, grinding of the article and its agglomeration to obtain an intermediate product, wherein the object is a shoe or a part of a shoe.

International application WO 2022/093810 relates to a method for recycling residual material or used fabrics, the method comprises providing a dispersed dyed fabric, shredding the fabric, thermally treating the shredded fabric to form granules and melting and shearing the granules in an extruder to form an article.

International application WO 2010/055965 relates to a method for manufacturing a high frequency welding thermoplastic polyurethane (TPU) film by recycling TPU film scrap, wherein the method involves a first step of pulverizing high frequency scrap generated in a high frequency process; a second step of mixing the pulverized high frequency- scrap with TPU, adjusting the physical property of the scrap, extruding the resultant, and manufacturing recycling TPU; and a third step of extruding the recycling TPU and manufacturing a high frequency welding TPU film.

International application WO 2018/049297 relates to a protective glove for a hand, comprising a first thermoplastic layer and a second thermoplastic layer welded to the first thermoplastic layer, wherein an opening exists between the first thermoplastic layer and the second thermoplastic layer which allows a user to place their hand into the glove, such that the user's hand is between the first thermoplastic layer and the second thermoplastic layer.

Chinese Publication CN 119 432 046 relates to a method of manufacturing TPU gloves, comprising the following steps of heating the TPU granules to a molten state, in the presence of zinc oxide aerogel granules while stirring until homogeneous and using the immersion method to immerse the heated hand mold in the immersion material and lifting the mold, cooling it and demold to obtain TPU gloves.

Chinese Publication CN 115 819 917 relates to an acrylonitrile butadiene styrene composite material wherein nitrile gloves are ground and cut and then mechanically ground to obtain nitrile glove powder that is processed with ABS.

Chinese Publication CN 116 461 131 relates to a method of processing disposable PE gloves comprising the steps of providing raw materials and heating, feeding them into a blow molding machine and blowing them into a PE film, pressing the PE film into disposable gloves with a finger mold and packaging qualified disposable PE gloves in boxes.

Disposable gloves composed of latex, nitrile or vinyl are also known. Latex gloves offer good protection and are comfortable to wear. However, in terms of skin friendliness, there is a risk of a latex allergy. Nitrile gloves counterbalance this risk but are less elastic than latex gloves. Vinyl gloves are described as less comfortable to wear and are less stretchy and tear-resistant than latex or nitrile gloves. Vinyl gloves also pose a risk for Use in the medical field or the food industry due to the plasticizers they may contain.

However, disposable gloves made from certain materials, such as nitrile, latex, or vinyl, have significant disadvantages in terms of environmental impact. A problem is that such disposable gloves are difficult to recycle and therefore contribute to massive amounts of plastic waste. Latex and nitrile gloves are not usually recycled due to the difficulty of separating them from other materials and the toxicity of some substances in the gloves, which increases the cost of processing and further complicates recycling. In addition, latex and nitrile gloves are difficult to recycle due to the raw materials used because such materials have undergone a vulcanized production process wherein chemical bonds are formed that make the material stronger and more elastic, but at the same time limit the possibility of reprocessing. The raw materials for these disposable gloves can only be reused to a limited extent, which leads to a significant waste of raw materials.

Thus, there is a need for a collection and processing system that not only meets the high hygienic requirements but also contributes to more sustainable waste management.

There is an urgent demand for a solution that makes the use of disposable gloves sustainable by simplifying their recycling while ensuring the quality and safety of the disposable gloves.

The present invention thus concerns a method for the useful reuse of one or more raw materials of disposable gloves composed of thermoplastic polyurethane (TPU), comprising the following steps:
i) collecting the used disposable gloves composed of thermoplastic polyurethane (TPU),
ii) selecting a stream rich in used disposable gloves composed of thermoplastic polyurethane (TPU) from the used disposable gloves collected according to i),
iii) cleaning the stream rich in used disposable gloves composed of thermoplastic polyurethane (TPU) according to ii),
(iv) forming the cleaned, used disposable gloves composed of thermoplastic polyurethane (TPU) into small particles according to (iii),
(v) processing the small particles according to (iv) into a granulate, wherein the thermoplastic polyurethane content in the granulate is at least 80 by weight, in particular at least 90 by weight, more particularly at least 95 % by weight, based on the weight of the granulate.

According to such a method one or more objects are met. In particular, the disposable gloves composed of thermoplastic polyurethane (TPU) are no longer collected in a conventional way and disposed of in a landfill or incinerated, but are collected in an effective and efficient manner and further processed into small particles that can in turn be returned to the chain or processed into other products.

The term 'composed of thermoplastic polyurethane (TPU)' should be understood as meaning that thermoplastic polyurethane (TPU) includes any of the components of the disposable gloves. Disposable gloves composed of thermoplastic polyurethane (TPU) also include one or more additives that are used in small quantities in the manufacture of the disposable gloves in accordance with a usual method, for example additives chosen from the group of plasticizers, antioxidants, dyes, surfactants, antistatic agents, and stabilizers.

According to an example, the granulate obtained in step (v) is further processed by means of extrusion and/or injection moulding technique into products other than disposable gloves composed of thermoplastic polyurethane. Examples of such products, in which the granulate thus obtained is a constituent, but not limited to, include telephone cases, draught strips, buckets, clothes hangers, roadside posts, furniture and garden accessories, for example, garden furniture and flower pots, packaging, such as bottles, containers, and bags, building materials, such as insulation panels, flooring and roofing, bottles, and food packaging. However, the present invention is not limited to such applications.

The granulate of recycled TPU gloves obtained according to the present invention may be used in new gloves for the medical and/or food sector if this raw material has been validated, checked, and declared safe by an external party.

According to an example, the granulate obtained in step v) is applied as a raw material for the manufacture of disposable gloves composed of thermoplastic polyurethane (TPU). This makes it possible to create a closed loop wherein the used disposable glove is collected and further processed into a raw material from which new disposable gloves composed of thermoplastic polyurethane (TPU) are made. It is possible that such a new disposable glove composed of thermoplastic polyurethane (TPU) is composed in part of recycled thermoplastic polyurethane (TPU) obtained according to the present method.

According to an example, the granulate obtained in step (v) is applied as a raw material for the manufacture of disposable gloves composed of thermoplastic polyurethane (TPU) for application in a wide range of sectors, except for the medical and food sectors due to regulations, but otherwise in one or more sectors chosen from cleaning and industrial sectors. Such a specific application imposes less stringent requirements on the origin of thermoplastic polyurethane (TPU) and thus on basis of thermoplastic polyurethane (TPU) obtained according to the present method disposable gloves can be made that are suitable for such a specific sector. The granulate obtained in step v), if validated by a third party, can also be used in the medical and food sector as a raw material for the manufacture of disposable gloves composed of thermoplastic polyurethane (TPU). The industrial sector also includes childcare and security, for example.

According to an example, step i) takes place at the location where the disposable gloves are applied, in particular at a location chosen from one or more of the medical, cleaning, industries, dental and hospitality sectors. Such a collection method reduces the risk of the disposable glove being collected with other materials, which must be removed from the waste stream at a later stage, which is undesirable.

According to an example, step (i) is carried out by means of a collector, equipped with a sealing mechanism, through which the used disposable glove is transferred into the collector.

An effective closed recycling system as contemplated by the present invention begins with a thoughtful collection process, in particular by use of a collector, also known as a collection bin, bag or box, for used TPU gloves. The aforementioned collector ensures that virtually no mixing takes place with other waste, so that the quality and purity of the recyclate to be obtained is guaranteed. The material present in the aforementioned collector thus consists mainly of used TPU gloves. By guaranteeing the homogeneity of the material to be collected at the source, it is virtually unnecessary to remove unwanted residual materials from the stream further down the chain.

However, it is also possible that used TPU gloves are not only collected separately, i.e. as a so-called monostream, but also together with other materials, such as PMD (Plastic, Metal and Beverage cartons) or other materials. An example of this is in hospitals where there are recycling bins where various products end up. These materials can later be sorted so that the used TPU gloves are still collected separately, in particular as a stream rich in used TPU gloves.

By applying smart identification technology, such as RFID tags or QR codes, the origin of the collected material can be traced, which contributes to quality control and optimization of the reuse of the collected material. The aforementioned collection bin, bag, box, or collector may be made of, for example, cardboard, hardened plastic, recycled plastic and be equipped with a plastic bag, in particular made of thermoplastic polyurethane.

The collection bin or collector shall preferably be equipped with such an opening and closing mechanism, in particular one or more of a flexible flap, sliding mechanism and a spring-loaded closure, which minimises the spread of odours, contamination and the insertion of foreign materials. It is also desirable that the collection bin or collector is suitable for transport and storage, in particular collapsible or stackable.

As indicated above, the collection of the used disposable gloves takes place at a location where the disposable gloves are applied, in particular at a location chosen from one or more of the medical, cleaning, industries, dental and hospitality sectors. The cleaning sector is understood to mean facility services. The disposable gloves thus collected must then be transferred to a location where a stream rich in used disposable gloves is obtained. There are diverse options available for this.

For example, it is possible to pick up the used disposable gloves by the same planning lines that are already used for the delivery of other goods, for example from the wholesaler to customers. It is also possible that the collection of used disposable gloves is organized through existing postal services wherein clients return the used disposable gloves in pre-arranged return packages that are collected via regular postal delivery. It is also possible to set up a network of collection points where clients return used disposable gloves, for example through cooperation with local shops, supermarkets or other service providers that already act as planning hubs. In addition, it is also possible to use recycling plants or processing stations to collect used disposable gloves, wherein existing infrastructure and transportation options are used to collect the disposable gloves and take them to a processing facility. It is also conceivable that recycling companies will collect used TPU gloves from the end user or from the wholesaler. It is also possible to set up a take-back program at specific users, such as hospitals, healthcare facilities or large companies, wherein the used disposable gloves are returned directly to a centralized collection point or station. It is also possible that a return system will be offered in which users return used disposable gloves in a pre-approved container or bin, which will then be collected by a transport company. It is also possible to set up a system wherein users directly submit a collection request for used disposable gloves via an online platform or app, wherein a transport service or delivery person comes to the specified location. It is also possible to offer a mobile pick-up service that drives through cities or regions to pick up used disposable gloves. In addition, it is also possible to have the transport take place via transport companies in order to have the collected disposable gloves transported at the same time as other goods. It is also possible that used disposable gloves are baled, pressed or vacuum-sealed at the wholesaler or the end user, so that transport becomes more efficient and less often necessary. To ensure efficient and high-quality recycling of TPU gloves, it is desirable that the collection stream is free of polluting materials. According to an example, step ii) is carried out by one or more optical sensors, wherein one or more residual streams are obtained that contain materials that are different from the stream rich in used disposable gloves. Such waste streams may be usefully reused. Step ii) aims to obtain a stream that consists predominantly of used disposable gloves.

According to an example, step ii) is carried out by one or more of a visual inspection and a weight inspection, wherein one or more residual flows are obtained that contain materials that differ from the stream rich in used disposable gloves. Such waste streams may be usefully reused. Step ii) thus aims to obtain a stream consisting predominantly of used disposable TPU gloves.

The "reprocessing" of the collection stream can thus take place through, for example, machine inspection, in particular by means of optical sensors that can detect different colours or materials, near-infrared (NIR) spectroscopy, wherein material types are recognised on the basis of their light reflection, X-ray analysis, wherein non-organic contaminants, such as metals or hard plastics, are identified, AI-based cameras that use machine learning systems to analyse the collection stream and detect deviations in shape, structure and colour, and weight and density control, wherein lighter or heavier objects that are not desirable are identified. Other possibilities for "reprocessing" the collection stream may include one or more types of density separation (float-sink), sieving and classification, friction and air currents (air classification), color recognition (VIS sensors), laser induction or spectroscopy, hyperspectral imaging, electrostatic separation, magnetic separation, or a combination of these methods, so-called hybrid systems, as well as solvent-selective recycling (solvent-based) and depolymerization / chemical recycling. As described above, solvent-based recycling and chemical recycling can not only be applied as a recycling step but also contribute to cleaning and/or decontamination. So-called "solvent recycling" uses solvents to dissolve TPU, after which the material can be purified again. The aforementioned techniques also ensure the removal of organic and inorganic contaminants through dissolution, separation, and purification, so that they can be seen as a step of selection and cleaning.

However, it is also possible that step ii) is carried out through a manual inspection, for example by a visual check by humans wherein trained operators inspect the stream and remove unwanted components, tactile screening, wherein people manually check for the presence of hard, rigid or mismatched materials, as well as sampling and lab analysis, wherein random checks are taken to test chemical or microbiological contaminants.

By combining one or more of the aforementioned methods, the purity of the stream to be further processed is guaranteed, i.e. obtaining a stream that consists predominantly of used disposable gloves.

According to an example, step (iii) is carried out by one or more of the following methods, chosen from the group of physical, chemical and thermal methods, wherein particular, the physical methods are chosen from the group of UV-C sterilization, treatment in an autoclave at elevated temperature and pressure, cleaning under application of reactive plasma ions, ultrasonic cleaning, microwave treatment and gamma irradiation, or a combination of these. UV-C sterilization can be understood as a fast and chemical-free method that effectively eliminates superficial contamination such as bacteria and viruses, which method is performed in a closed chamber with controlled dosing of UV-C radiation. Treatment in an autoclave at elevated temperature and pressure is applied in situations where deeper microbiological cleaning is required, completely removing bacterial and viral pathogens. The application of reactive plasma ion cleaning preserves the material properties of thermoplastic polyurethane, which is desirable for its reuse.

Examples of chemical methods include the group of chemical cleaning with solvents, treatment with hydrogen peroxide vapor, treatment with ozone and sterilization under the application of chlorine dioxide, or a combination of these. Such chemical methods remove organic contaminants such as fats and proteins, wherein particular account must be taken of the compatibility of the thermoplastic polyurethane matrix and the cleaning agents used.

Examples of thermal methods include the group of sterilization under elevated temperature in the range of 80-200°C and cleaning with steam, or a combination of these. In certain embodiments it is also possible to carry out step iii) in an industrial washing machine wherein use is made from a mild detergent, followed by a disinfection step, for example with alcohol or a disinfectant solution. It has also been possible to carry out step iii) by first making a physical separation based on type or contamination, after which the separated stream is immersed in a specific cleaning system, depending on the type of contamination such as grease or chemicals. It is also possible to have a cleaning take place in a drying oven in a certain embodiment, wherein the gloves used are cleaned by a drying process, using air flow or a drying oven, after a dry-cleaning process.

The present inventors have found that for the cleaning of used disposable gloves from a stream rich in used gloves, it is important to find a balance between effectiveness in removing contaminants and preserving the material properties of the gloves. **It** should be noted that the aforementioned methods such as steam cleaning, UV-C sterilization, and autoclave treatment are effective for sterilization, while mechanical washing and cleaning systems and chemical treatments are suitable for the removal of physical debris. Solvent-selective treatment is a suitable method for purification, cleaning, and/or decontamination. In addition, the cleaning steps may also include one or more of the following methods: pre-cleaning (dry cleaning), wet washing (water- or solvent-based), advanced purification techniques, such as thermal, chemical or physical purification, and physical purification after cleaning, for example by melt filtration and/or vacuum degassing during an extrusion process. These methods can be applied separately or in combination, depending on the nature and degree of contamination.

According to an example, step (iv) is carried out by one or more of the following methods, chosen from the group of shredding, in particular of the mechanical, ultrasonic, and cryogenic type, and sieving.

For mechanical shredding, the gloves used are cut into small pieces or shredded. It is also possible to perform the shredding of the gloves in smaller pieces, followed by the screening of the material to remove unwanted particles and standardize the size. It is also possible to combine the shredding of the gloves with a controlled heating, wherein the material structure is broken down before further processing. It is also possible to use ultrasonic waves to shred the gloves into small pieces by high-frequency vibrations.

It is also possible to use extremely low temperatures to freeze the material, making the material brittle before shredding takes place. It is also possible to use a plasma beam to heat and break down the gloves, after which the smaller particles can be further processed. It is also possible to reduce the material to microscopic or nanoscopic particles, for example by means of a ball mill. It is also possible to shred the gloves, for example by a hydraulic technique, followed by mechanical cleaning to remove any remaining contaminants or impurities. It is also possible to expose the gloves to a controlled biodegradation environment wherein bacteria and fungi break down the material. Possible techniques for shredding can be mentioned: mechanical shredding, double-shaft shredder (twin-shaft / two-shaft shredder), four-shaft shredder (quad-shaft shredder), knife mill or granulator, thermomechanical and cryogenic shredding, hot or thermo-mechanical shredding and cooling or cryogrinding.

According to an example, step v) is carried out by one or more of the following methods, chosen from the group of compounding, extrusion, injection moulding, thermolysis, melt blowing, mixing, melting, solvent dissolving, enzymatic treatment, and vulcanisation.

According to an example, after cleaning the stream rich in used disposable gloves, composed of thermoplastic polyurethane (TPU) according to ii), the stream thus obtained is processed into small particles by means of extrusion. The small particles thus obtained can then be mixed with one or more auxiliaries, for example polymers or additives, to create a new material that allows the properties of the recycled material to be modified, in particular strength, flexibility or durability. It is also possible to process the aforementioned stream together with one or more auxiliaries in an extruder. Thus, compounding can take place before or after an extrusion step.

Compounding is the process wherein shredded material is mixed with one or more auxiliaries, for example polymers or additives, to create a new material that allows the properties of the recycled material to be modified, in particular strength, flexibility or durability.

Pelletizing or granulation involves mechanical/thermal processing of shredded TPU material into a granulate without additives.

In extrusion, the shredded material is melted and pressed through a mould to form a new product, such as granulate or a certain shape of material that can be further processed.

In injection molding, the shredded material is melted and injected into a mold to form a new product. Thermolysis is a chemical process wherein the material is heated in an oxygen-deficient environment, breaking it down into smaller molecules. In melt blowing, the material is melted and then forced through a small opening, splitting it into fine threads or fibers. It is also possible to merge the shredded material with other types of plastic or polymers and then melt it down to create new materials. In enzymatic treatment, biological processes, such as enzymes, are used to break down plastics and convert them into reusable products. In vulcanization, the material is exposed to heating and/or a chemical additive to change the structure and make the material harder or more flexible.

The present invention also relates to a granulate, obtained according to a method as described above, wherein the content of thermoplastic polyurethane in the granulate at least 80 % by weight, in particular at least 90 % by weight, more particularly at least 95% by weight, based on the weight of the granulate. A granulate wherein the thermoplastic polyurethane content in the granulate is at least 99 wt.%. based on the weight of the granulate, is also possible.

For the manufacture of products, other than disposable gloves, it is possible that the amount of such granulate is in the range of 50% by weight - 100% by weight, based on the product to be manufactured. However, it is also possible that for the manufacture of products other than disposable gloves, the amount of such granulate is in the range of 0-25 wt., 25-50 wt.%, 50-100 wt.%, wherein factors include purity, processing parameters and application requirements. The granulate can also be mixed in a quantity of, for example, 10-15 percent.

The present invention also relates to disposable gloves in which the aforementioned granulate is incorporated, wherein particular the disposable glove can be used in a wide range of sectors, except in principle for the medical and food sectors due to regulations, but otherwise in all other sectors, for example the cleaning and industry. The TPU granulate obtained according to the present invention is of such pure and controlled quality that, provided that the applicable legal requirements and inspections are met, it can be used for the manufacture of disposable gloves intended for use in the medical and food sectors, among others. In addition, the granulate obtained can also be used as a raw material for other products used in these sectors.

Furthermore, the present invention relates to a system for collecting disposable gloves composed of thermoplastic polyurethane and further processing them into granulate, wherein the resulting granulate is used as a raw material for the manufacture of disposable gloves composed of thermoplastic polyurethane. However, the aforementioned system also supervises compound instead of granulate. In addition, the granulate obtained in this way can be processed as a raw material for products used in the medical and food sectors.

The present invention thus relates to a disposable glove composed of thermoplastic polyurethane (TPU) and a complete recycling system, including a specialised collection bin for mono-streams. By combining advanced manufacturing and recycling techniques, thermoplastic polyurethane becomes reusable without a major decrease in strength and elasticity, drastically reducing its environmental impact.

The recycled granulate obtained with the present method can be further adapted to desired specifications by adding additives, chemical or physical modifications, or other processing techniques, making the granulate suitable for high-value applications.

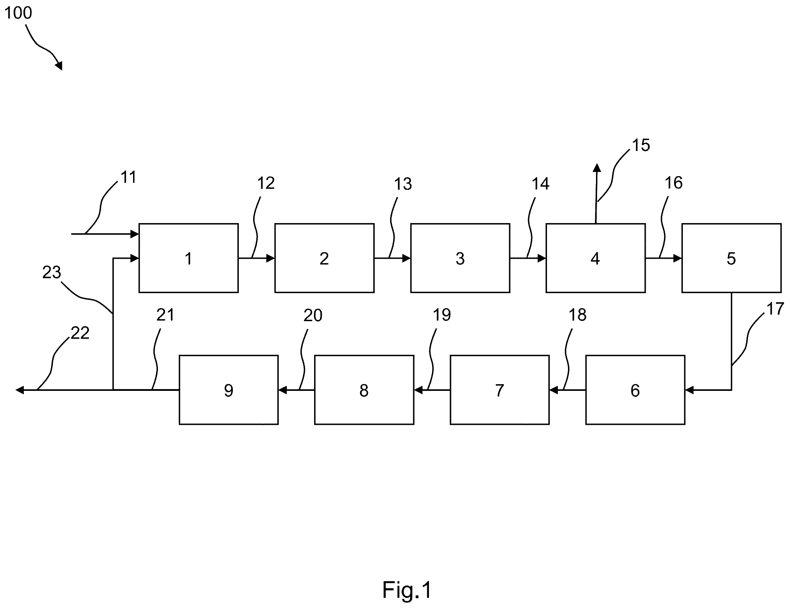

The present invention is explained below by means of a figure, which figure is only for illustrative purposes and should not be construed as restrictive. The enclosed figure shows a flowchart of a method, denoted by reference number 100, for the useful reuse of one or more raw materials of disposable gloves composed of thermoplastic polyurethane (TPU).

Raw materials 11 are processed into disposable gloves composed of thermoplastic polyurethane (TPU) according to an existing production process 1. The disposable gloves made in this way 12 are used in various sectors 2, including medical, cleaning, Industries, dental and catering. After use of disposable gloves, the used disposable gloves 13 are collected, for example by means of a collector 3, equipped with a sealing mechanism, through which the used disposable glove is transferred into the collector. The disposable gloves 14 thus collected are transferred via the logistical methods described above to a location 4 where a selection process takes place, wherein a stream rich in used disposable gloves 16 is obtained. The aforementioned selection process results in one or more residual flows 15 that are disposed of. The stream rich in used disposable gloves 16 is subjected to a cleaning step 5, in particular a decontamination step, followed by a washing step 6. For example, cleaning step 5 includes one or more of pre-cleaning (dry cleaning), wet washing (water or solvent-based) and physical purification after cleaning.

In certain embodiments, it is possible to have both steps 5 and 6 take place at the same time, or first a washing step and then a decontamination step. However, it is also possible to only perform cleaning step 5 or also only washing step 6. For example, after a decontamination step 5, the disposable gloves 17 thus decontaminated are subjected to a washing step 6, after which the disposable gloves 18 washed in this way are led to a shredding step 7, in which the cleaned, used disposable gloves are formed into small particles 19. It is also possible that cleaning step 5 and washing step 6 take place after the shredding step 7, because cleaning, filtering and/or decontamination can also take place during the extrusion process due to the elevated temperature prevailing in the extrusion process. The disposable gloves 19 shredded in this way are further processed in a step 8 of compounding. For example, the resulting stream 20 is further processed into granulate 21 via extrusion 9. It is also possible to first process the shredded disposable gloves into a granulate via an extrusion step, after which a compounding step is carried out, wherein one or more auxiliaries are added to the granulate, resulting in a composite granulate. However, it is also possible to add one or more auxiliaries during the extrusion step, which immediately results in a compound.

The granulate or compound 21 thus obtained, mainly comprising thermoplastic polyurethane, can be processed into certain products 22 in a separate process. It is also possible to integrate the shredding step 7 into the extrusion step before compound is obtained. The shredder and the extruder are then incorporated into a single apparatus. However, the present invention is not limited to the extrusion step mentioned here.

It is also possible to bring granulate 23 back into the existing production process 1 in order to manufacture disposable gloves composed of thermoplastic polyurethane (TPU) therefrom.

## Claims

1. A method for the useful reuse of one or more raw materials of disposable gloves composed of thermoplastic polyurethane (TPU), comprising the following steps:
i) collecting the used disposable gloves composed of thermoplastic polyurethane (TPU),
ii) selecting a stream rich in used disposable gloves composed of thermoplastic polyurethane (TPU) from the used disposable gloves collected according to i),
iii) cleaning the stream rich in used disposable gloves composed of thermoplastic polyurethane (TPU) according to ii),
(iv) forming the cleaned, used disposable gloves composed of thermoplastic polyurethane (TPU) into small particles according to (iii),
(v) processing the small particles according to (iv) into a granulate, wherein the thermoplastic polyurethane content in the granulate is at least 80 by weight, in particular at least 90 by weight, more particularly at least 95 % by weight, based on the weight of the granulate.

2. A method according to claim 1, wherein the granulate obtained in step (v) is further processed by means of extrusion and/or injection moulding technique into products other than disposable gloves composed of thermoplastic polyurethane.

3. A method one or more of the preceding claims, wherein the granulate obtained in step (v) are used as a raw material for the manufacture of disposable gloves composed of thermoplastic polyurethane (TPU).

4. A method according to claim 3, wherein the granulate obtained in step (v) are applied as a raw material for the manufacture of disposable gloves composed of thermoplastic polyurethane (TPU) for use in a sector chosen from the cleaning and industrial sectors.

5. A method according to one or more of the preceding claims, wherein step (i) takes place at a location where the disposable gloves are applied, in particular at a location chosen from one or more of the medical, cleaning, Industry-, dental and hospitality sector.

6. A method according to one or more of the preceding claims, wherein step (i) is carried out by means of a collector, equipped with a locking mechanism, through which the used disposable glove is transferred into the collector.

7. A method according to one or more of the preceding claims, wherein step (ii) is performed by one or more optical sensors, wherein one or more residual flows are obtained that contain materials that differ from the stream rich in used disposable gloves.

8. A method according to one or more of the preceding claims, wherein step (ii) is performed by one or more of a visual inspection and a weight inspection, wherein one or more residual flows are obtained that contain materials that differ from the stream rich in used disposable gloves.

9. A method according to one or more of the preceding claims, wherein step (iii) is carried out by one or more of the following methods, chosen from the group of physical, chemical and thermal methods, wherein the physical methods are chosen from the group of UV-C sterilization, treatment in autoclave at elevated temperature and pressure, cleaning under application of reactive plasma ions, ultrasonic cleaning, microwaves and gamma irradiation, or a combination of these, wherein The chemical methods have been chosen from the group of chemical cleaning with solvents, treatment with hydrogen peroxide vapour, treatment with ozone and sterilization under application of chlorine dioxide, or a combination of these, and wherein the thermal methods are chosen from the group of sterilization under elevated temperature in the range of 80-200°C and cleaning with steam, or a combination of these.

10. A method according to one or more of the preceding claims, wherein step iv) is performed by one or more of the following methods, chosen from the group of shredding, in particular of the mechanical, ultrasonic, and cryogenic types, and sieves.

11. A method according to one or more of the preceding claims, wherein step v) is performed by one or more of the following methods, chosen from the group of compounding, extrusion, injection molding, thermolysis, melt blowing, mixing, melting, solvent dissolving, enzymatic treatment, and vulcanization.

12. Granulate obtained according to a method according to one or more of the preceding claims, wherein the thermoplastic polyurethane content in the granulate is at least 80 % by weight, in particular at least 90% by weight, more specifically at least 95% by weight, based on the weight of the granulate.

13. A disposable glove comprising granulate according to claim 12.

14. A disposable glove according to claim 13, wherein the disposable glove is applicable in a sector chosen from the cleaning and industrial sectors.

15. A system for collecting disposable gloves composed of thermoplastic polyurethane and further processing them into granulate, wherein the resulting granulate is used as a raw material for the manufacture of disposable gloves composed of thermoplastic polyurethane.
